# EUROPEAN PATENT SPECIFICATION

(11) **EP 2 111 008 B1**
(45) Date of publication and mention of the grant of the patent: **12.09.2012**
(21) Application number: 08826405.6
(22) Date of filing: 15.07.2008
(51) Int. Cl.: H04L 29/06

(54) **A METHOD, SYSTEM AND DEVICE FOR REALIZING THE MEDIA CONTENT CONVERSION**
VERFAHREN, SYSTEM UND VORRICHTUNG ZUM DURCHFÜHREN DER MEDIENINHALTSKONVERTIERUNG
PROCÉDÉ, SYSTÈME ET DISPOSITIF DE MISE EN OEUVRE DE CONVERSION DE CONTENU MULTIMÉDIA

(30) Priority: 19.07.2007 CN 200710130455
(43) Date of publication of application: 21.10.2009
(73) Proprietor: Huawei Technologies Co., Ltd., Longgang District, Shenzhen Guangdong 518129 (CN)
(72) Inventor: DING, Zhiming, Shenzhen 518129 (CN); YANG, Bo, Shenzhen 518129 (CN); ZHONG, Hui, Shenzhen 518129 (CN); WU, Huangwei, Shenzhen 518129 (CN); SHU, Guiming, Shenzhen 518129 (CN); HU, Junling, Shenzhen 518129 (CN); ZHANG, Zhiyong, Shenzhen 518129 (CN)
(74) Representative: Kreuz, Georg Maria
(86) International application number: PCT/CN2008/071640
(87) International publication number: WO 2009/010005

(56) References cited:
- CN-A- 1 489 354
- CN-A- 1 681 323
- CN-A- 1 697 427
- CN-A- 1 852 436
- US-A1- 2005 265 395
- US-A1- 2006 168 323

## Description

### Field of the Invention

The present invention relates to multimedia communication technologies, and in particular, to a method and system for converting media contents, a media application terminal, a media conversion apparatus, and a content source device.

### Background of the Invention

Media contents transmitted in multimedia communications include video files, audio files, and pictures. There are many media coding formats for the video files, audio files and pictures. Media contents in various formats can be found on a network. In addition, different multimedia contents may have different resolutions and frame rates. However, due to the limited playing capability of an application terminal, the same application terminal may not play media contents in any format. For example, an interactive TV over IP set top box (IPTV STB) can only support one or two of MPEG2, MPEG4, and H.264. People all hope that media contents in various formats can be played on an application terminal.

To implement interconnection and intercommunication between audio video (AV) applications in a home network, the Digital Living Network Alliance (DLNA) proposes a virtual media server and a virtual player, directing to providing media content conversion services during the transmission of media streams. The virtual media server proposed by the DLNA may be a function module of a real media server or an independent physical device. The virtual player proposed by the DLNA may be a function module of a real application terminal or an independent physical device. The virtual multimedia server is used in media applications in Pull mode. That is, an application terminal browses and selects a media resource through the virtual media server, and requests the selected media resource from the real media server through the virtual media server; when media streams flow out of the real media server, the media streams flow towards the virtual media server first; and the media streams are transferred to the application terminal after the formats of media streams are converted by the virtual media server into the formats supported by the application terminal. The virtual player is used in media applications in Push mode. That is, when an application terminal pushes its contents to a real player, the media streams are pushed to a virtual player first; the media streams are transferred to a bound real player after the formats of the media streams are converted by the virtual player into the formats supported by the real player.

In the Pull mode applications described by the DLNA, the media application terminal accesses the virtual media server, and selects a media content on a content source device through the virtual media server. In addition, all the operations of the media application terminal are performed through the virtual media server. Thus, the virtual media server can know the playing capability of the application terminal, and judge whether to convert the media content selected by the media application terminal. The Pull mode media applications are limited to the above application mode. The Pull mode operation process described by the DLNA is not applicable to the case that a user specifies a uniform resource identifier (URI) of a media resource on the network or a user clicks a media link when browsing web pages. In this case, the operation process is not implemented through the virtual media server, so the media streams do not pass through the virtual media server. If the application terminal of the user does not support the format of the specified media resource, the method described by the DLNA cannot provide the user with the media content conversion service when the media streams do not pass through the virtual media server.

In addition, the media contents on most media servers are protected. For example, media contents are under the protection of digital rights management (DRM), or media services cannot be used until the device and user identity pass the authentication. The above solution for converting media contents proposed by the DLNA does not solve the problems of DRM authentication, device authentication, and user identity authentication.

In conclusion, the solution to converting media contents in the prior art cannot support all the Pull mode scenarios. In addition, the solution for converting media contents in the prior art does not solve the authentication problem.
US 2006/168323A1 discloses a transcoding method and apparatus for a mobile communication system provided with a transcoder. The transcoding method includes receiving a request for media content and codec information required for the requested media content, receiving the requested media content from a media content server and determining whether the received codec information exists, transformatting a format of the received media content by a codec of the codec information if the received codec information exists, searching the codec list and installing the codec information and transformatting the format of the received media content using the installed codec, determining whether a transmission bandwidth through which the transformatted media content are transmitted is smaller than a bandwidth of the transformatting codec, transrating the format of the media content by a codec suitable for the transmission bandwidth if the transmission bandwidth is smaller than the bandwidth of the transformatting codec, and transmitting the transrated media content.
US 2005/265395A1 discloses a system for providing a multimedia service to a portable device. The multimedia service system of the present invention includes a multimedia source, a hardware transcoder, an interface unit, a storage unit and a portable device. The multimedia source provides multimedia contents including video and/or audio data. The hardware transcoder converts the multimedia contents into contents having a format suitable for a display device of the portable device. The interface unit transmits the contents converted by the transcoder. The storage unit stores therein the contents received through the interface unit. The portable device receives the contents from the storage unit and displays the contents. The transcoder changes at least one of video and/or audio formats, a bandwidth (data rate), a frame rate and a resolution of the contents provided from the multimedia source.

### Summary of the Invention

According to one aspect, a method for converting media contents to perform media content conversion and authentication in any application is proposed.

According to a further aspect, a media application terminal to perform media content conversion and authentication in any Pull mode application is proposed.

According to a still further aspect, a media conversion apparatus to perform media content conversion and authentication in any application is proposed.

According to another aspect, a content source device to perform media content conversion and authentication in any application is proposed.

A method for converting media contents is proposed, which includes receiving, by a media conversion apparatus, a media conversion service request and an authentication ID from a media application terminal, wherein the media conversion service request carries a media content ID and playing capability information of the media application terminal, and the authentication ID is associated with a media transmission redirection request and sent by a content source device to the media application terminal after the content source device receives the media transmission redirection request from the media application terminal; sending, by the media conversion apparatus, a media content transmission request that carries the media content ID to the content source device, and sending the authentication ID to the content source device; and receiving, by the media conversion apparatus, a media content identified by the media content ID from the content source device after the content source device determines that the media content transmission request is valid according to the authentication ID, and converting the received media content according to the playing capability information of the media application terminal, and sending the converted media content to the media application terminal.

A media application terminal is proposed which includes a media transmission redirection requesting module and a media conversion service requesting module. The media transmission redirection requesting module is adapted to: send a media transmission redirection request to a content source device, receive an authentication ID associated with the media transmission redirection request from the content source device, and send the authentication ID to the media conversion service requesting module. And the media conversion service requesting module is adapted to: send media conversion service request and the authentication ID to a media conversion apparatus, wherein the media conversion service request carries a media content ID and playing capability information of the media application terminal; and receive a media content from the media conversion apparatus.

A media conversion apparatus is proposed which includes a media conversion service interface module and a media conversion processing module. The media conversion service interface module is adapted to: send a media content transmission request that carries a media content ID and an authentication ID to a content source device after receiving a media conversion service request and the authentication ID from a media application terminal, wherein the media conversion service request carries the media content ID and playing capability information of the media application terminal, and send the playing capability information of the media application terminal to the media conversion processing module. The media conversion processing module is adapted to: receive a media content from the content source device and the playing capability information of the media application terminal from the media conversion service interface module, convert the received media content, and send the converted media content to the media application terminal.

A content source device is proposed which includes a media redirection service interface module, an authenticating module, and a media content sending module. The media redirection service interface module is adapted to: after receiving a media transmission redirection request from a media application terminal, send the media transmission redirection request to the authenticating module, receive an authentication ID returned from the authenticating module, and send the authentication ID to the media application terminal. The authenticating module is adapted to: send the authentication ID associated with the media transmission redirection request to the media redirection service interface module after receiving the media transmission redirection request from the media redirection service interface module; judge whether the authentication ID is valid after receiving the authentication ID from the media content sending module; and send an acknowledgment message to the media content sending module if determining that the authentication ID is valid. The media content sending module is adapted to: send the authentication ID to the authenticating module after receiving the authentication ID and the media content transmission request carrying a media content ID from a media conversion apparatus, and send a media content identified by the media content ID to the media conversion apparatus after receiving the acknowledgment message from the authenticating module.

According to one scenario, the media application terminal sends a media transmission redirection request to the content source device, obtains an authentication ID from the content source device, and sends a media conversion service request and the authentication ID to the media conversion apparatus, where the media conversion service request carries a media content ID and playing capability information of the media application terminal; the media conversion apparatus sends the authentication ID and a media content transmission request carrying the media content ID to the content source device; the content source device sends the media content identified by the media content ID to the media conversion apparatus after determining that the media content transmission request is valid according to the authentication ID; and the media conversion apparatus converts the received media content according to the playing capability information of the media application terminal, and sends the converted media content to the media application terminal. Thus, the media content conversion process is initiated by the media application terminal, and is irrelevant to how the application terminal obtains the media content ID. That is, the technical solution is always applicable and is implemented in a same way in any application mode where the media transmission is initiated by the application terminal according to the media content ID.

According to an additional or alternative scenario, the content source device sends the allocated authentication ID to the media conversion apparatus through the media application terminal, and the media conversion apparatus sends the authentication ID to the content source device, so that the content source device may authenticate the media content transmission request from the media conversion apparatus. Thus, during the media content conversion process, the authentication on the media conversion apparatus may be performed between the media application terminal and the content source device, and the media conversion apparatus does not participate in the authentication directly. This enables the media conversion apparatus to be used in various authentication systems, making it unnecessary to design different media conversion apparatuses for different authentication systems to suit different authentication modes.

### Brief Description of the Drawings

FIG. 1 is a flowchart of a method for converting media contents in an embodiment of the present invention;

FIG. 2 is a specific application flowchart of the method shown in FIG. 1;

FIG. 3 shows a structure of a system for converting media contents in an embodiment of the present invention;

FIG. 4 is a block diagram of the internal structure and external connection of a media application terminal 301 shown in FIG. 3;

FIG. 5 is a block diagram of the internal structure and external connection of a media conversion apparatus 302 shown in FIG. 3;

FIG. 6 is a block diagram of the internal structure and external connection of an content source device 303 shown in FIG. 3; and

FIG. 7 shows a scenario where the system for converting media contents shown in FIG. 3 is used.

### Detailed Description of Embodiments of the Invention

In a media application, a media application terminal sends a media content transmission request to a content source device. After receiving the request, the content source device transmits media contents to the media application terminal. After receiving the media contents, the media application terminal may use the media contents; for example, it may play the media contents. Because the media contents have various coding formats, the codes of the media contents requested by the media application terminal may not be supported by the media application terminal. In this case, the media application terminal cannot use the media contents; for example, it cannot play the media contents. In addition to the coding formats, the resolutions and frame rates of the media contents may not comply with the requirements of the media application terminal. In this case, the media application terminal cannot play the media contents either. Further, if the content source device and the media application terminal support different media transmission protocols, the media application terminal cannot receive a media content from a media source. In the preceding cases, media contents need to be converted.

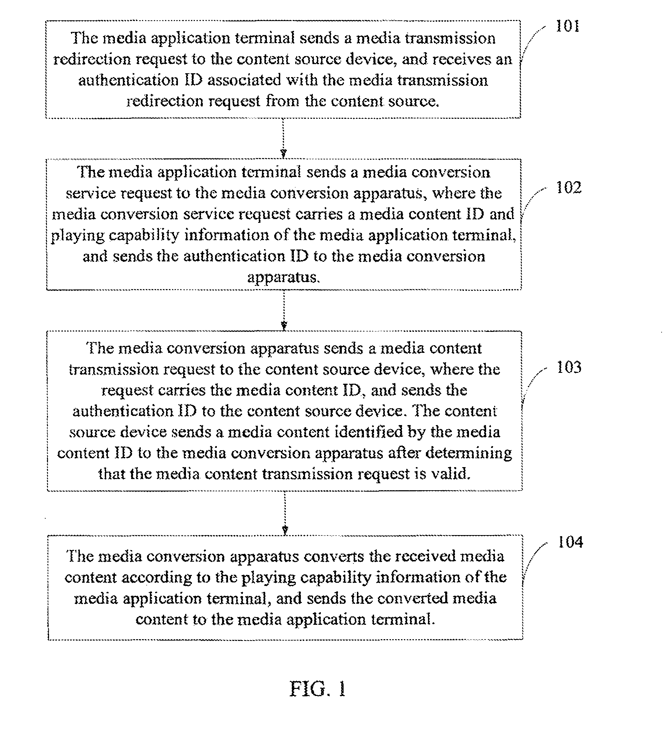

FIG.1 is a flowchart of a method for converting media contents in an embodiment of the present invention. As shown in FIG. 1, the method includes the following steps:

Step 101: The media application terminal sends a media transmission redirection request to the content source device, and receives an authentication ID from the content source device, where the authentication ID is associated with the media transmission redirection request.

Step 102: The media application terminal sends a media conversion service request to the media conversion apparatus, where the media conversion service request carries a media content ID and playing capability information of the media application terminal, and sends the authentication ID to the media conversion apparatus.

Step 103: The media conversion apparatus sends a media content transmission request to the content source device, where the request carries the media content ID, and sends the authentication ID to the content source device. The content source device sends a media content identified by the media content ID to the media conversion apparatus after determining that the media content transmission request is valid according to the authentication ID.

Step 104: The media conversion apparatus converts the received media content according to the playing capability information of the media application terminal, and sends the converted media content to the media application terminal.

Through the preceding steps shown in FIG. 1, the media conversion apparatus provides the media application terminal with a media conversion service, and the content source device uses a unique authentication ID to identify the media content transmission. As a result, the media conversion apparatus does not need to participate in various complex authentication processes directly; instead, the media conversion apparatus wins trust from the content source device by using the unique authentication ID, so that the authentication interface is easy to be implemented during the media transmission process in which the media conversion apparatus acts as a third party.

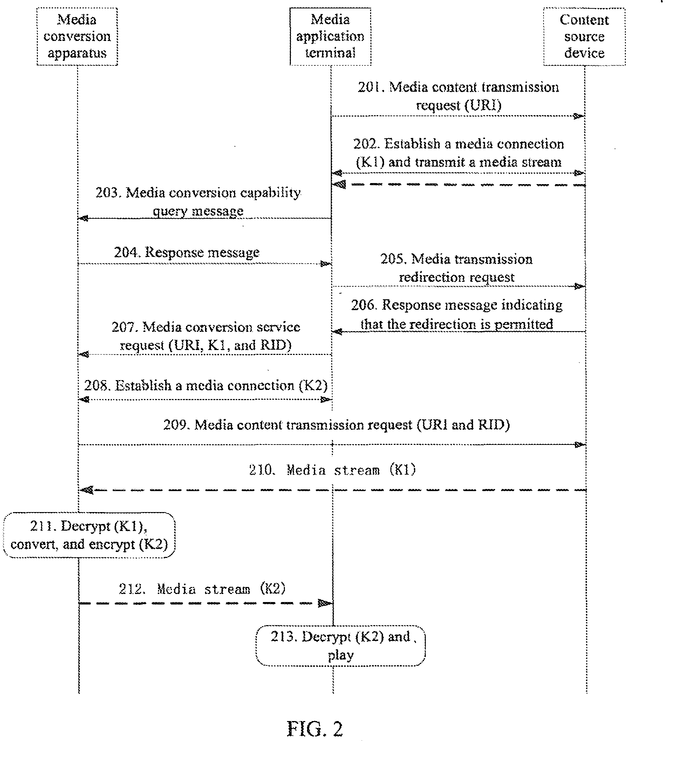

FIG. 2 is a specific application flowchart of the method shown in FIG. 1. As shown in FIG. 2, the method includes the following steps:

Step 201: The media application terminal sends a media content transmission request to the content source device, where the media content transmission request carries the media content ID URI.

In this step, the media application terminal may resolve the domain name of the content source device included in the URI through a Domain Name System (DNS) protocol to obtain the IP address of the content source device, and request a media content from the content source device through the Real-Time Streaming Protocol (RTSP) or Hypertext Transfer Protocol (HTTP). These details in the prior art are already known by those skilled in the art, and will not be further described.

Step 202: After receiving the media content transmission request, the content source device authenticates the media application terminal. After the authentication succeeds, the content source device responds to the request of the media application terminal, sets up a connection with the media application terminal, and sends the media content identified by the URI to the media application terminal.

In this step, the mode of authentication that the content source device performs on the media application terminal varies with the DRM application system.

In this step, the connection set up between the content source device and the media application terminal includes a control channel and a media transmission channel, where the control channel is adapted to transmit various control signals, and the media transmission channel is adapted to transmit a real media stream. The media application terminal and the content source device negotiate transmission protocol and media description information when setting up a connection. The media application terminal may also obtain the description information of the requested media content by other means before setting up a connection with the content source device. The description information of the media content includes the coding format of the media content and resolution.

In this step, if the media content is encrypted for transmission, the media application terminal and the content source device need to negotiate a key K1.

In this step, the content source device and the media application terminal may set up a connection after successfully negotiating the transmission protocol and media format, or set up a connection without negotiating the media format if a consistent transmission protocol is consistent.

In FIG. 2, the dotted arrow indicates the direction in which the media content is transmitted, that is, the direction of the media stream.

Step 203: After resolving the received media content and finding that the media application terminal cannot play the media content, the media application terminal sends a media conversion capability query message to the media conversion apparatus, where the media conversion capability query message includes playing capability information of the media application terminal and description information of the media content.

In this step, if the media application terminal does not obtain the description information of the media content, the media application terminal may carry only the playing capability information of the media application terminal in the media conversion capability query message sent to the media conversion apparatus.

Step 204: The media conversion apparatus compares the received playing capability information of the media application terminal and description information of the media content, and judges whether the media conversion can be implemented according to the available conversion capability and remaining bandwidths of the media conversion apparatus. When determining that the media conversion can be implemented, the media conversion apparatus sends a response message indicating that the media conversion can be implemented to the media application terminal; otherwise, the media conversion apparatus sends a reject message to the media application terminal. In this embodiment, the media conversion apparatus may implement media conversion according to the requirements of the media application terminal.

In this step, if the media conversion apparatus receives only the playing capability information of the media application terminal, and does not receive description information of the media content, that is, in step 203, the media application terminal carries only the playing capability information of the media application terminal in the media conversion capability query message sent to the media conversion apparatus, the media conversion apparatus may assume that it can implement the conversion, and send a response message indicating that the conversion can be implemented to the media application terminal.

Step 205: After receiving the response message indicating that the conversion can be implemented from the media conversion apparatus, the media application terminal sends a media transmission redirection request to the content source device.

In this step, the media transmission redirection request may carry the URI of the media content of which the transmission direction needs to be changed. Starting from step 201, the content source device sets up a session with the media application terminal. The media transmission redirection request is only a step in the session process. Thus, the media transmission redirection request may not carry the URI. If the media application terminal terminates the session with the content source device and sets up another session to initiate a media transmission redirection request, the media transmission redirection request should carry the URI.

In this step, the intention of sending a media transmission redirection request by the media application terminal is to require the content source device to transmit the media content identified by the URI to another address rather than the media application terminal. The URI includes the IP address or domain name of the device where the identified media content is located, and the directory and file name of the media content on the device. However, the directory and file name in the URI may not be the same as the directory and file name viewed in the file system of the device where the media content is located.

In this step, the media application terminal may disconnect the media transmission channel between the media application terminal and the content source device set up in step 202. The content source device may also disconnect the media transmission channel after receiving the media transmission redirection request.

Step 206: After receiving the media transmission redirection request from the media application terminal, the content source device returns a response message to the media application terminal, where the response message indicates that media transmission redirection is permitted, and carries an authentication ID RID for subsequent authentication.

The methods for constructing the RID and performing subsequent authentication by the media source device are not limited in this embodiment of the present invention. Those skilled in the art may use many feasible methods. For example, the RID includes the URI of the required media content and device ID of the application terminal or digest of an authentication key.

In this step, the content source device may update the key K1 for transmitting the encrypted media content between the content source device and the media application terminal.

If the content source device rejects the media transmission redirection request from the media application terminal or does not respond to the media transmission redirection request upon timeout, this process ends.

Step 207: After receiving a response to the media transmission redirection request from the content source device, the media application terminal sends a media conversion service request to the media conversion apparatus, where the media conversion service request carries the URI, K1 between the media application terminal and the content source device, and RID from the content source device.

Step 203 is optional. If the media application terminal does not query the media conversion apparatus for information about whether the media conversion can be implemented, that is, step 203 and step 204 are not executed, the media conversion service request sent to the media conversion apparatus in step 207 needs to carry the playing capability information of the media application terminal so that the media conversion apparatus can convert the media content in the subsequent process. The media conversion service request may further carry the description information of the media content so that the media conversion apparatus can judge whether the media conversion can be implemented and this is not described herein further.

Step 208: After receiving the media conversion service request from the media application terminal, the media conversion apparatus sets up a media connection with the media application terminal to negotiate K2 necessary for encrypting the media content.

Step 209: The media conversion apparatus sends a media content transmission request to the content source device, where the media content transmission request carries the URI and RID.

Step 210: After receiving the media content transmission request from the media conversion apparatus, the content source device authenticates the media conversion apparatus according to the URI and RID carried in the request, sets up a media connection with the media conversion apparatus after the authentication succeeds, and transmits the media content identified by the URI to the media conversion apparatus.

Step 211: After receiving the media content from the content source device, the media conversion apparatus decrypts the media content with K1, performs media content conversion according to the playing capability information of the media application terminal, including code conversion, resolution conversion, and frame rate conversion, and encrypts the converted media content with K2.

In this step, if finding that the media content from the content source device cannot be converted, the media conversion apparatus may notify the media application terminal of conversion failure, and disconnect the connection from the content source device. Then, the process ends.

Step 212: The media conversion apparatus sends the media content that is converted and re-encrypted to the media application terminal.

Step 213: The media application terminal decrypts the media content from the media conversion apparatus with K2, and plays the decrypted media content.

The media content conversion process ends.

In the preceding process, the media conversion apparatus receives the media content from the content source device through a transmission protocol supported by the content source device, and transmits the media content to the media application terminal through a transmission protocol supported by the media application terminal, thus implementing conversion of media transmission protocols.

Encryption methods are classified into symmetric encryption and asymmetric encryption. In the symmetric method, K1 and K2 shown in FIG. 2 are both an encryption key and a decryption key. In the asymmetric method, K1 and K2 may be an encryption key or a decryption key of a key pair or may be a key pair according to the context.

In the embodiment shown in FIG. 2, the media conversion service request in step 207 and the media content transmission request in step 209 may not carry the RID, which may be transmitted by other means. For example, after receiving a media content transmission request from the media conversion apparatus, the content source device queries the media conversion apparatus for the RID; after receiving the RID query message from the content source device, the media conversion apparatus queries the media application terminal for the RID; after receiving the RID query message from the media conversion apparatus, the media application terminal sends the RID to the media conversion apparatus; and then the media conversion apparatus sends the RID to the content source device.

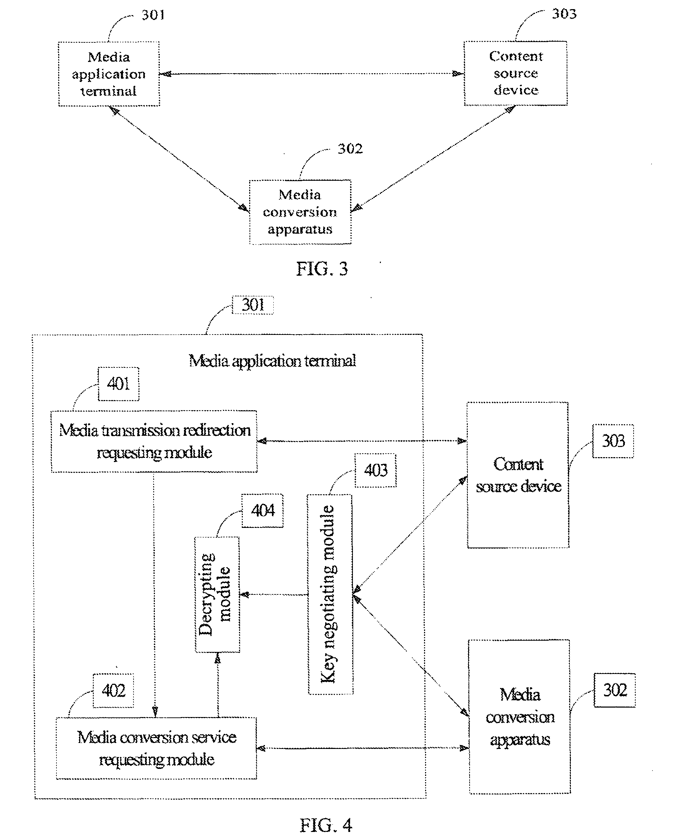

FIG. 3 shows a structure of a system for converting media contents in an embodiment of the present invention. As shown in FIG. 3, the system includes a media application terminal 301, a media conversion apparatus 302, and a content source device 303.

As shown in FIG. 3, the media application terminal 301 is adapted to: send a media transmission redirection request to the content source device 303 and receive an authentication ID associated with the media transmission redirection request from the content source device 303; send a media conversion service request and the authentication ID to the media conversion apparatus 302, where the media conversion service request carries a media content ID and playing capability information of the media application terminal 301; and receive a media content from the media conversion apparatus 302.

The media conversion apparatus 302 is adapted to: send the authentication ID and a media content transmission request that carries the media content ID to the content source device 303 after receiving the media conversion service request that carries the media content ID and playing capability information of the media application terminal 301 and the authentication ID; receive a media content from the content source device 303, and convert the media content according to the received playing capability information of the media application terminal 301; and send the converted media content to the media application terminal 301.

The content source device 303 is adapted to: send the authentication ID associated with the media transmission redirection request to the media application terminal 301 after receiving the media transmission redirection request from the content source device 301; and send a media content identified by the media content ID to the media conversion apparatus 302 after determining that the media content transmission request is valid according to the authentication ID from the media conversion apparatus 302.

Before the media transmission redirection request that carries the media content ID is sent to the content source device 303, the media application terminal 301 is further adapted to: accept the authentication by the content source device 303, obtain the media content identified by the media content ID from the content source device 303, and send the media transmission redirection request to the content source device 303 if finding that the received media content cannot be played by the media application terminal 301. The content source device 303 is further adapted to: authenticate the media application terminal 301, and send the media content to the media application terminal 301 after the authentication succeeds.

The media application terminal 301 is further adapted to send a media conversion capability query message to the media application terminal 302, where the media conversion capability query message carries the playing capability information of the media application terminal and description information of the media content. The media conversion apparatus 302 is further adapted to: judge whether a conversion service can be provided according to the playing capability information of the media application terminal and the description information of the media content carried in the media conversion capability query message and the media content conversion capability of the media conversion apparatus, and send a response message indicating that the conversion can be implemented to the media application terminal 301 if determining that the conversion service can be provided.

The content source device 303 is further adapted to: negotiate a first key with the media application terminal 301, encrypt the media content with the first key, and send the encrypted media content to the media conversion apparatus 302. The media application terminal 301 is further adapted to: negotiate the first key with the content source device 303, negotiate a second key with the content conversion apparatus 302, send the first key to the media conversion apparatus 302, and decrypt the media content from the media conversion apparatus 302 with the second key. The media conversion apparatus 302 is further adapted to: negotiate the second key with the media application terminal 301, and receive the first key from the media application terminal 301; decrypt the media content from the content source device 303 with the first key, and convert the decrypted media content; and encrypt the processed media content with the second key, and send the encrypted media content to the media application terminal 301.

The media application terminal 301 may be further adapted to send media control information to the content source device 303. The content source device 303 is further adapted to control data streams of the media content sent to the media conversion apparatus 302 according to the received media control information.

FIG. 4 is a block diagram of the internal structure and external connection of the media application terminal 301 shown in FIG. 3. As shown in FIG. 4, the media application terminal 301 includes a media transmission redirection requesting module 401 and a media conversion service requesting module 402.

In FIG. 4, the media transmission redirection requesting module 401 is adapted to: send a media transmission redirection request to the content source device 303, receive an authentication ID associated with the media transmission redirection request from the content source device 303, and send the authentication ID to the media conversion service requesting module 402.

The media conversion service requesting module 402 is adapted to: send a media conversion service request and the authentication ID to the media conversion apparatus 302, where the media conversion service request carries a media content ID and playing capability information of the media application terminal, and receive media content from the media conversion apparatus 302.

The media application terminal 301 in FIG. 4 further includes a key negotiating module 403 and a decrypting module 404, which are represented by dotted lines.

In FIG. 4, the key negotiating module 403 is adapted to: negotiate a first key with the content source device 303, negotiate a second key with the media conversion apparatus 302, send the first key to the media conversion apparatus 302, and send the second key to the decrypting module 404. The media conversion service requesting module 402 is further adapted to send the received media content to the decrypting module 404. The decrypting module is adapted to decrypt the received media content with the received second key.

The media application terminal shown in FIG. 4 is applicable in any application, and is implemented in a same way. In addition, the media application terminal can implement authentication.

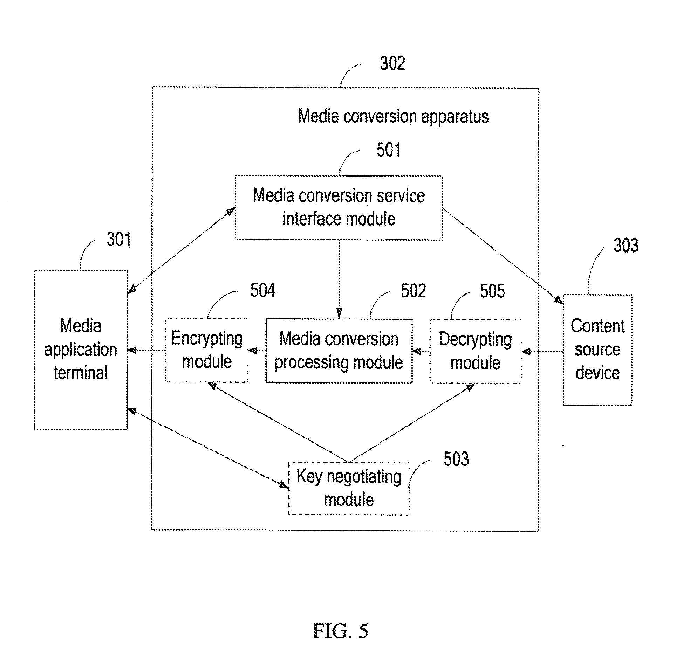

FIG. 5 is a block diagram of the internal structure and external connection of the media conversion apparatus 302 shown in FIG. 3. As shown in FIG. 3, the media conversion apparatus 302 includes a media conversion service interface module 501 and a media conversion processing module 502.

In FIG. 5, the media conversion service interface module 501 is adapted to: send an authentication ID and a media content transmission request that carries a media content ID to the content source device 303 after receiving a media conversion service request and the authentication ID from the media application terminal 301, where the media conversion service request carries the media content ID and playing capability information of the media application terminal 301, and send the playing capability information of the media application terminal 301 to the media conversion processing module 502.

The media conversion processing module 502 is adapted to: receive a media content from the content source device 303 and the playing capability information of the media application terminal 501 from the media conversion service interface module 501, convert the received media content according to the playing capability information of the media application terminal 301, and send the converted media content to the media application terminal 301.

In FIG. 5, the media conversion service interface module 501 is further adapted to: receive a media conversion capability query message from the media application terminal 301, where the media conversion capability query message carries the playing capability information of the media application terminal and the description information of the media content, judge whether a conversion service can be provided according to the playing capability information of the media application terminal and the description information of the media content carried in the media conversion capability query message and the media content conversion capability of the media conversion service interface module, and send a response message indicating that the conversion can be implemented to the media application terminal 301 if determining that the conversion service can be provided.

The media conversion apparatus 302 in FIG. 5 further includes a key negotiating module 503, a decrypting module 504, and a decrypting module 505, which are represented by dotted lines. The key negotiating module 503 is adapted to: negotiate a second key with the media application terminal 301, send the second key to the encrypting module 504, receive a first key from the media application terminal 301, and send the first key to the decrypting module 505. The decrypting module 505 is adapted to: decrypt the media content from the content source device 303 with the received first key, and send the decrypted media content to the media conversion processing module 502. The encrypting module 504 is adapted to: encrypt the media content from the media conversion processing module 502 with the received second key, and send the encrypted media content to the media application terminal 301.

The media conversion apparatus 302 shown in FIG. 5 is applicable in any application, and is implemented in a same way. In addition, the media application terminal 302 can implement authentication.

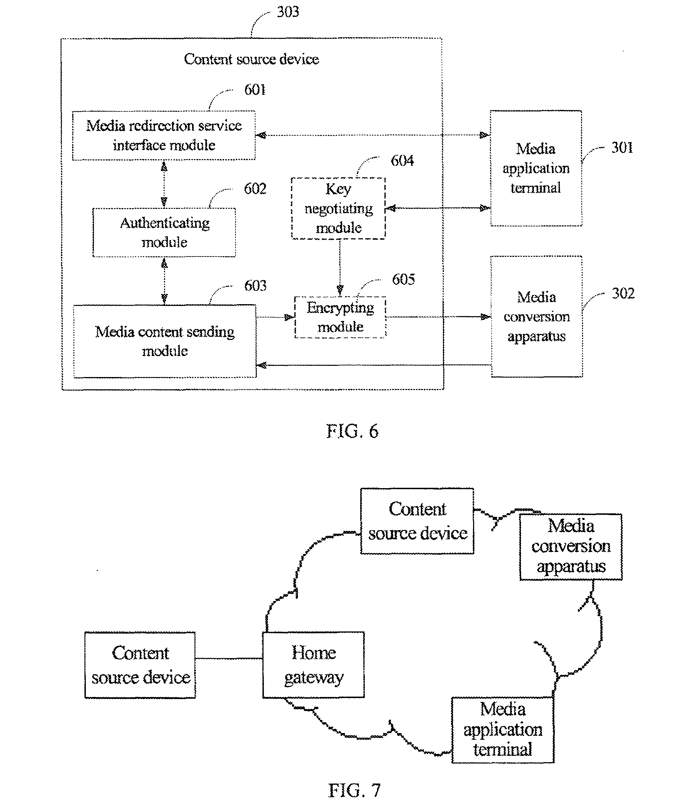

FIG. 6 is a block diagram of the internal structure and external connection of the content source device 303 shown in FIG. 3. As shown in FIG. 6, the content source device 303 includes a media redirection service interface module 601, an authenticating module 602, and a media content sending module 603.

The media redirection service interface module 601 is adapted to: after receiving a media transmission redirection request from the media application terminal 301, send the media transmission redirection request to the authenticating module 602, receive an authentication ID returned from the authenticating module 602, and send the authentication ID to the media application terminal.

The authenticating module 602 is adapted to: send the authentication ID associated with the media transmission redirection request to the media redirection service interface module 601 after receiving the media transmission redirection request from the media redirection service interface module 601; judge whether the media content transmission request is valid according to the authentication ID after receiving a media content transmission request and the authentication ID from the media content sending module 603; and send an acknowledgment message to the media content sending module 603 if determining that the media content transmission request is valid.

The media content sending module 603 is adapted to: forward the media content transmission request and the authentication ID to the authenticating module 602 after receiving the authentication ID and the media content transmission request carrying a media content ID from the media conversion apparatus 302, and send a media content identified by the media content ID to the media conversion apparatus 302 after receiving the acknowledgment message from the authenticating module 602.

The content source device 303 in FIG. 6 further includes a key negotiating module 604 and an encrypting module 605, which are represented by dotted lines. The key negotiating module 604 is adapted to: negotiate a key with the media application terminal 301, and send the key to the encrypting module 605.

The encrypting module 605 is adapted to: encrypt the media content from the media content sending module 603 with the received key, and send the encrypted media content to the media conversion apparatus 302.

The content source device 303 shown in FIG. 6 is applicable in any application, and is implemented in a same way. In addition, the content source device 303 can authenticate the media conversion apparatus.

FIG. 7 shows a scenario where the system for converting media contents shown in FIG. 3 is used. FIG. 7 shows a networking diagram of a home network. The media application terminal and the media conversion apparatus are located in the home network, but the content source device may be located in or out of the home network. When the content source device is located out of the home network, the content source may communicate with the devices in the home network through a home gateway.

In conclusion, in embodiments of the present invention, the media application terminal sends a media transmission redirection request to the content source device, obtains an authentication ID from the content source device, and sends a media conversion service request and the authentication ID to the media conversion apparatus, where the media conversion service request carries a media content ID and playing capability information of the media application terminal; the media conversion apparatus sends the authentication ID and a media content transmission request carrying the media content ID to the content source device; the content source device sends the media content identified by the media content ID to the media conversion apparatus after determining that the authentication ID is valid; and the media conversion apparatus converts the received media content according to the playing capability information of the media application terminal, and sends the converted media content to the media application terminal. Thus, the media content conversion process is initiated by the media application terminal, and is irrelevant to how the application terminal obtains the media content ID. That is, the technical solution is always applicable and implemented in a same way in any application mode where the media transmission is initiated by the application terminal according to the media content ID.

In addition, in embodiments of the present invention, the content source device sends the allocated authentication ID to the media conversion apparatus through the media application terminal, and the media conversion apparatus sends the authentication ID to the content source device, so that the content source device may authenticate the media content transmission request from the media conversion apparatus. Thus, during the media content conversion process, the authentication on the media conversion apparatus may be performed between the media application terminal and the content source device, and the media conversion apparatus does not participate in the authentication directly. This enables the media conversion apparatus to be used in various authentication systems, making it unnecessary to design different media conversion apparatuses for different authentication systems to suit different authentication modes.

Although the present invention has been described through some exemplary embodiments, the invention is not limited to these embodiments. It is apparent that those skilled in the art can make various modifications and variations without departing from the scope of the invention as defined by the following claims.

## Claims

1. A method for converting media contents, comprising:
receiving (102, 207), by a media conversion apparatus, a media conversion service request and an authentication ID from a media application terminal, wherein the media conversion service request carries a media content ID and playing capability information of the media application terminal, and the authentication ID is associated with a media transmission redirection request (205) and sent (206) by a content source device to the media application terminal after the content source device receives the media transmission redirection request from the media application terminal;
sending (103, 209), by the media conversion apparatus, a media content transmission request that carries the media content ID to the content source device, and sending the authentication ID to the content source device;
receiving (103, 210), by the media conversion apparatus, a media content identified by the media content ID from the content source device after the content source device determines that the media content transmission request is valid according to the authentication ID; and
converting (104, 211), by the media conversion apparatus, the received media content according to the playing capability information of the media application terminal, and sending (104, 212) the converted media content to the media application terminal.

2. The method of claim 1, wherein:
the process of receiving the authentication ID from the media application terminal by the media conversion apparatus comprises: receiving (207), by the media conversion apparatus, the authentication ID carried in the media conversion service request from the media application terminal; and/or
the process of sending the authentication ID to the content source device by the media conversion apparatus comprises: carrying, by the media conversion apparatus, the authentication ID in the media content transmission request (209) sent to the content source device.

3. The method of claim 1, wherein: after the media conversion apparatus sends the media content transmission request to the content source device, the method further comprises: receiving, by the media conversion apparatus, an authentication ID query message from the content source device; and
sending, by the media conversion apparatus, the authentication ID from the media application terminal to the content source device after receiving the authentication ID query message from the content source device; or
querying, by the media conversion apparatus, the media application terminal for the authentication ID after receiving the authentication ID query message from the content source device; and, sending, by the media conversion apparatus, the authentication ID to the content source device after receiving the authentication ID from the media application terminal.

4. The method of claim 1, wherein:
before the media conversion apparatus sends the media content transmission request to the content source device, the method further comprises: negotiating, by the content source device, a first key with the media application terminal; receiving, by the media conversion apparatus, the first key from the media application terminal; and negotiating, by the media conversion apparatus, a second key with the media application terminal;
before the media conversion apparatus receives the media content identified by the media content ID from the content source device, the method further comprises:
encrypting, by the content source device, the media content with the first key;
before the media conversion apparatus converts the received media content, the method further comprises: decrypting, by the media conversion apparatus, the received media content with the first key; and
after the media conversion apparatus converts the received media content, the method further comprises: encrypting, by the media conversion apparatus, the converted media content with the second key.

5. The method of claim 4, wherein after the content source device negotiates the first key with the media application terminal and before the content source device sends the media content to the media conversion apparatus or during the process of sending the media content to the media conversion apparatus by the content source device, the method further comprises: updating the first key.

6. A media application terminal, comprising a media transmission redirection requesting module (401) and a media conversion service requesting module (402), wherein:
the media transmission redirection requesting module is adapted to: send a media transmission redirection request (205) to a content source device, receive an authentication ID associated with the media transmission redirection request from the content source device, and send the authentication ID to the media conversion service requesting module; and
the media conversion service requesting module is adapted to: send (207) a media conversion service request and the authentication ID to a media conversion apparatus, wherein the media conversion service request carries a media content ID and playing capability information of the media application terminal, and receive a media content from the media conversion apparatus.

7. The media application terminal of claim 6, further comprising a key negotiating module (403) and a decrypting module (404), wherein:
the key negotiating module is adapted to: negotiate a first key with the content source device, negotiate a second key with the media conversion apparatus, send the first key to the media conversion apparatus, and send the second key to the decrypting module;
the media conversion service requesting module is further adapted to send the received media content to the decrypting module; and
the decrypting module is adapted to decrypt the received media content with the received second key.

8. A media conversion apparatus, comprising a media conversion service interface module (501) and a media conversion processing module (502), wherein:
the media conversion service interface module is adapted to: send a media content transmission request (209) that carries a media content ID and an authentication ID to a content source device after receiving (207) a media conversion service request and the authentication ID from a media application terminal, wherein the media conversion service request carries the media content ID and playing capability information of the media application terminal, and send the playing capability information of the media application terminal to the media conversion processing module; and
the media conversion processing module is adapted to: receive a media content from the content source device and the playing capability information of the media application terminal from the media conversion service interface module, convert the received media content, and send the converted media content to the media application terminal.

9. The media conversion apparatus of claim 8, further comprising a key negotiating module (503), an encrypting module (504) and a decrypting module (505), wherein:
the key negotiating module is adapted to: negotiate a second key with the media application terminal, send the second key to the encrypting module, receive a first key from the media application terminal, and send the first key to the decrypting module;
the decrypting module is adapted to: decrypt the media content from the content source device with the received first key, and send the decrypted media content to the media conversion processing module; and
the encrypting module is adapted to: encrypt the media content from the media conversion processing module with the received second key, and send the encrypted media content to the media application terminal.

10. A content source device, comprising a media redirection service interface module (601), an authenticating module (602), and a media content sending module (603), wherein:
the media redirection service interface module is adapted to: after receiving a media transmission redirection request (205) from a media application terminal, send the media transmission redirection request to the authenticating module, receive an authentication ID returned from the authenticating module, and send the authentication ID to the media application terminal;
the authenticating module is adapted to: send the authentication ID associated with the media transmission redirection request to the media redirection service interface module after receiving the media transmission redirection request from the media redirection service interface module; judge whether the media content transmission request is valid according to the authentication ID after receiving a media content transmission request and the authentication ID from the media content sending module; and send an acknowledgment message to the media content sending module if determining that the media content transmission request is valid; and
the media content sending module is adapted to: forward the media content transmission request and the authentication ID to the authenticating module after receiving the media content transmission request carrying a media content ID and the authentication ID from a media conversion apparatus, and send a media content identified by the media content ID to the media conversion apparatus after receiving the acknowledgment message from the authenticating module.

11. The content source device of claim 10, further comprising a key negotiating module (604) and an encrypting module (605), wherein:
the key negotiating module is adapted to: negotiate a key with the media application terminal, and send the key to the encrypting module; and
the encrypting module is adapted to: encrypt the media content from the media content sending module with the received key, and send the encrypted media content to the media conversion apparatus.

12. A system for converting media contents, comprising a media application terminal (301) according to claim 6, a media conversion apparatus (302) according to claim 8, and a content source device (303) according to claim 10, wherein:
the media application terminal is adapted to: send a media transmission redirection request (205) to the content source device and receive an authentication ID associated with the media transmission redirection request from the content source device; and send (207) a media conversion service request and the authentication ID to the media conversion apparatus, wherein the media conversion service request carries a media content ID and playing capability information of the media application terminal; and receive a media content from the media conversion apparatus;
the media conversion apparatus is adapted to: send a media content transmission request (209) that carries the media content ID and the authentication ID to the content source device after receiving the media conversion service request that carries the media content ID and the playing capability information of the media application terminal and the authentication ID from the media application terminal; receive a media content from the content source device, and convert the media content according to the received playing capability information of the media application terminal; and send the converted media content to the media application terminal; and
the content source device is adapted to: send the authentication ID associated with the media transmission redirection request to the media application terminal after receiving the media transmission redirection request from the media application terminal; and receive the media content transmission request carrying the media content ID and the authentication ID from the media conversion apparatus and send a media content identified by the media content ID to the media conversion apparatus after determining the media content transmission request is valid according to the authentication ID.

## Patentansprüche

1. Verfahren zum Umsetzen von Medieninhalten, mit den folgenden Schritten:
Empfangen (102, 207) einer Medienumsetzungsdienstanforderung und einer Authentifizierungs-ID durch eine Medienumsetzungsvorrichtung von einem Medienanwendungsendgerät, wobei die Medienumsetzungsdienstanforderung eine Medieninhalts-ID und Wiedergabefähigkeitsinformationen des Medienanwendungsendgeräts führt und die Authentifizierungs-ID mit einer Medienübertragungs-Umleitanforderung (205) assoziiert ist und durch eine Inhaltsquelleneinrichtung zu dem Medienanwendungsendgerät gesendet wird (206),
nachdem die Inhaltsquelleneinrichtung die Medienübertragungs-Umleitanforderung von dem Medienanwendungsendgerät empfängt;
Senden (103, 209) einer Medieninhaltsübertragungsanforderung, die die Medieninhalts-ID führt, durch die Medienumsetzungsvorrichtung zu der Inhaltsquelleneinrichtung und Senden der Authentifizierungs-ID zu der Inhaltsquelleneinrichtung;
Empfangen (103, 210) des durch die Medieninhalts-ID identifizierten Medieninhalts durch die Medienumsetzungsvorrichtung von der Inhaltsquelleneinrichtung, nachdem die Inhaltsquelleneinrichtung gemäß der Authentifizierungs-ID bestimmt, dass die Medieninhaltsübertragungsanforderung gültig ist; und
Umsetzen (104, 211) des empfangenen Medieninhalts durch die Medienumsetzungsvorrichtung gemäß den Wiedergabefähigkeitsinformationen des Medienanwendungsendgeräts und Senden (104, 212) des umgesetzten Medieninhalts zu dem Medienanwendungsendgerät.

2. Verfahren nach Anspruch 1, wobei
der Prozess des Empfangens der Authentifizierungs-ID von dem Medienanwendungsendgerät durch die Medienumsetzungsvorrichtung Folgendes umfasst: Empfangen (207) der in der Medienumsetzungsdienstanforderung von dem Medienanwendungsendgerät geführten Authentifizierungs-ID durch die Medienumsetzungsvorrichtung; und/oder
der Prozess des Sendens der Authentifizierungs-ID zu der Inhaltsquelleneinrichtung durch die Medienumsetzungsvorrichtung Folgendes umfasst: Führen der Authentifizierungs-ID in der zu der Inhaltsquelleneinrichtung gesendeten Medieninhaltsübertragungsanforderung (209) durch die Medienumsetzungsvorrichtung.

3. Verfahren nach Anspruch 1, wobei, nachdem die Medienumsetzungsvorrichtung die Medieninhaltsübertragungsanforderung zu der Inhaltsquelleneinrichtung sendet, das Verfahren ferner Folgendes umfasst: Empfangen einer Authentifizierungs-ID-Abfragenachricht durch die Medienumsetzungsvorrichtung von der Inhaltsquelleneinrichtung; und
Senden der Authentifizierungs-ID von dem Medienanwendungsendgerät durch die Medienumsetzungsvorrichtung zu der Inhaltsquelleneinrichtung nach dem Empfang der Authentifizierungs-ID-Abfragenachricht von der Inhaltsquelleneinrichtung; oder Abfragen des Medienanwendungsendgeräts durch die Medienumsetzungsvorrichtung nach der Authentifizierungs-ID nach dem Empfang der Authentifizierungs-ID-Abfragenachricht von der Inhaltsquelleneinrichtung; und Senden der Authentifizierungs-ID durch die Medienumsetzungsvorrichtung zu der Inhaltsquelleneinrichtung nach dem Empfang der Authentifizierungs-ID von dem Medienanwendungsendgerät.

4. Verfahren nach Anspruch 1, wobei
das Verfahren, bevor die Medienumsetzungsvorrichtung die Medieninhaltsübertragungsanforderung zu der Inhaltsquelleneinrichtung sendet, ferner Folgendes umfasst: Aushandeln eines ersten Schlüssels durch die Inhaltsquelleneinrichtung mit dem Medienanwendungsendgerät; Empfangen des ersten Schlüssels durch die Medienumsetzungsvorrichtung von dem Medienanwendungsendgerät; und Aushandeln eines zweiten Schlüssels durch die Medienumsetzungsvorrichtung mit dem Medienanwendungsendgerät;
das Verfahren, bevor die Medienumsetzungsvorrichtung den durch die Medieninhalts-ID identifizierten Medieninhalt von der Inhaltsquelleneinrichtung empfängt, ferner Folgendes umfasst: Verschlüsseln des Medieninhalts durch die Inhaltsquelleneinrichtung mit dem ersten Schlüssel;
das Verfahren, bevor die Medienumsetzungsvorrichtung den empfangenen Medieninhalt umsetzt, ferner Folgendes umfasst: Entschlüsseln des empfangenen Medieninhalts durch die Medienumsetzungsvorrichtung mit dem ersten Schlüssel; und
das Verfahren, nachdem die Medienumsetzungsvorrichtung den empfangenen Medieninhalt umsetzt, ferner Folgendes umfasst: Verschlüsseln des umgesetzten Medieninhalts durch die Medienumsetzungsvorrichtung mit dem zweiten Schlüssel.

5. Verfahren nach Anspruch 4, wobei das Verfahren, nachdem die Inhaltsquelleneinrichtung den ersten Schlüssel mit dem Medienanwendungsendgerät aushandelt und bevor die Inhaltsquelleneinrichtung den Medieninhalt zu der Medienumsetzungsvorrichtung sendet oder während des Prozesses des Sendens des Medieninhalts zu der Medienumsetzungsvorrichtung durch die Inhaltsquelleneinrichtung, ferner Folgendes umfasst: Aktualisieren des ersten Schlüssels.

6. Medienanwendungsendgerät, das ein Medienübertragungs-Umleitungsanforderungsmodul (401) und ein Medienumsetzungsdienst-Anforderungsmodul (402) umfasst, wobei
das Medienübertragungs-Umleitungsanforderungsmodul für Folgendes ausgelegt ist:
Senden einer Medienübertragungs-Umleitungsanforderung (205) zu einer Inhaltsquelleneinrichtung, Empfangen einer mit der Medienübertragungs-Umleitungsanforderung assoziierten Authentifizierungs-ID von der Inhaltsquelleneinrichtung und Senden der Authentifizierungs-ID zu dem Medienumsetzungsdienst-Anforderungsmodul; und
das Medienumsetzungsdienst-Anforderungsmodul für Folgendes ausgelegt ist: Senden (207) einer Medienumsetzungsdienstanforderung und der Authentifizierungs-ID zu einer Medienumsetzungsvorrichtung, wobei die Medienumsetzungsdienstanforderung eine Medieninhalts-ID und Wiedergabefähigkeitsinformationen des Medienanwendungsendgeräts führt, und Empfangen eines Medieninhalts von der Medienumsetzungsvorrichtung.

7. Medienanwendungsendgerät nach Anspruch 6, das ferner ein Schlüsselaushandlungsmodul (403) und ein Entschlüsselungsaushandlungsmodul (404) umfasst, wobei das Schlüsselaushandlungsmodul für Folgendes ausgelegt ist:
Aushandeln eines ersten Schlüssels mit der Inhaltsquelleneinrichtung, Aushandeln eines zweiten Schlüssels mit der Medienumsetzungsvorrichtung, Senden des ersten Schlüssels zu der Medienumsetzungsvorrichtung und Senden des zweiten Schlüssels zu dem Entschlüsselungsmodul;
das Medienumsetzungsdienst-Anforderungsmodul ferner dafür ausgelegt ist, den empfangenen Medieninhalt zu dem Entschlüsselungsmodul zu senden; und
das Entschlüsselungsmodul dafür ausgelegt ist, den empfangenen Medieninhalt mit dem empfangenen zweiten Schlüssel zu entschlüsseln.

8. Medienumsetzungsvorrichtung, die ein Medienumsetzungsdienst-Schnittstellenmodul (501) und ein Medienumsetzungs-Verarbeitungsmodul (502) umfasst, wobei
das Medienumsetzungsdienst-Schnittstellenmodul für Folgendes ausgelegt ist:
Senden einer Medieninhaltsübertragungsanforderung (209), die eine Medieninhalts-ID und eine Authentifizierungs-ID führt, zu einer Inhaltsquelleneinrichtung nach dem Empfang (207) einer Medienumsetzungsanforderung und der Authentifizierungs-ID von einem Medienanwendungsendgerät, wobei die Medienumsetzungsdienstanforderung die Medieninhalts-ID und
Wiedergabefähigkeitsinformationen des Medienanwendungsendgeräts führt, und Senden der Wiedergabefähigkeitsinformationen des Medienanwendungsendgeräts zu dem Medienumsetzungs-Verarbeitungsmodul; und
das Medienumsetzungs-Verarbeitungsmodul für Folgendes ausgelegt ist: Empfangen eines Medieninhalts von der Inhaltsquelleneinrichtung und der Wiedergabefähigkeitsinformationen des Medienanwendungsendgeräts von dem Medienumsetzungsdienst-Schnittstellenmodul, Umsetzen des empfangenen Medieninhalts und Senden des umgesetzten Medieninhalts zu dem Medienanwendungsendgerät.

9. Medienumsetzungsvorrichtung nach Anspruch 8, die ferner ein Schlüsselaushandlungsmodul (503), ein Verschlüsselungsmodul (504) und ein Entschlüsselungsmodul (505) umfasst, wobei
das Schlüsselaushandlungsmodul für Folgendes ausgelegt ist: Aushandeln eines zweiten Schlüssels mit dem Medienanwendungsendgerät, Senden des zweiten Schlüssels zu dem Verschlüsselungsmodul, Empfangen eines ersten Schlüssels von dem Medienanwendungsendgerät und Senden des ersten Schlüssels zu dem Entschlüsselungsmodul;
das Entschlüsselungsmodul für Folgendes ausgelegt ist: Entschlüsseln des Medieninhalts von der Inhaltsquelleneinrichtung mit dem empfangenen ersten Schlüssel und Senden des entschlüsselten Medieninhalts zu dem Medienumsetzungs-Verarbeitungsmodul; und
das Verschlüsselungsmodul für Folgendes ausgelegt ist: Verschlüsseln des Medieninhalts von dem Medienumsetzungs-Verarbeitungsmodul mit dem empfangenen zweiten Schlüssel und Senden des verschlüsselten Medieninhalts zu dem Medienanwendungsendgerät.

10. Inhaltsquelleneinrichtung, das ein Medienumleitungsdienst-Schnittstellenmodul (601), ein Authentifizierungsmodul (602) und ein Medieninhalts-Sendemodul (603) umfasst, wobei
das Medienumleitungsdienst-Schnittstellenmodul für Folgendes ausgelegt ist: nach dem Empfangen einer Medienübertragungs-Umleitungsanforderung (205) von einem Medienanwendungsendgerät, Senden der Medienübertragungs-Umleitungsanforderung zu dem Authentifizierungsmodul, Empfangen einer von dem Authentifizierungsmodul zurückgegebenen Authentifizierungs-ID und Senden der Authentifizierungs-ID zu dem Medienanwendungsendgerät;
das Authentifizierungsmodul für Folgendes ausgelegt ist: Senden der mit der Medienübertragungs-Umleitungsanforderung assoziierten Authentifizierungs-ID zu dem Medienumleitungsdienst-Schnittstellenmodul nach dem Empfang der Medienübertragungs-Umleitungsanforderung von dem Medienumleitungsdienst-Schnittstellenmodul; Beurteilen, ob die Medieninhaltsübertragungsanforderung gültig ist, gemäß der Authentifizierungs-ID nach dem Empfang einer Medieninhaltsübertragungsanforderung und der Authentifizierungs-ID von dem Medieninhalts-Sendemodul; und Senden einer Bestätigungsnachricht zu dem Medieninhalts-Sendemodul, wenn bestimmt wird, dass die Medieninhaltsübertragungsanforderung gültig ist; und
das Medieninhalts-Sendemodul für Folgendes ausgelegt ist: Weiterleiten der Medieninhaltsübertragungsanforderung und der Authentifizierungs-ID zu dem Authentifizierungsmodul nach dem Empfang der Medieninhaltsübertragungsanforderung, die eine Medieninhalts-ID und die Authentifizierungs-ID führt, von einer Medienumsetzungsvorrichtung und Senden eines durch die Medieninhalts-ID identifizierten Medieninhalts zu der Medienumsetzungsvorrichtung nach dem Empfang der Bestätigungsnachricht von dem Authentifizierungsmodul.

11. Inhaltsquelleneinrichtung nach Anspruch 10, die ferner ein Schlüsselaushandlungsmodul (604) und ein Verschlüsselungsmodul (605) umfasst, wobei
das Schlüsselaushandlungsmodul für Folgendes ausgelegt ist: Aushandeln eines Schlüssels mit dem Medienanwendungsendgerät und Senden des Schlüssels zu dem Verschlüsselungsmodul; und
das Verschlüsselungsmodul für Folgendes ausgelegt ist: Verschlüsseln des Medieninhalts von dem Medieninhalts-Sendemodul mit dem empfangenen Schlüssel und Senden des verschlüsselten Medieninhalts zu der Medienumsetzungsvorrichtung.

12. System zum Umsetzen von Medieninhalten, das ein Medienanwendungsendgerät (301) nach Anspruch 6, eine Medienumsetzungsvorrichtung (302) nach Anspruch 8 und eine Inhaltsquelleneinrichtung (303) nach Anspruch 10 umfasst, wobei das Medienanwendungsendgerät für Folgendes ausgelegt ist: Senden einer Medienübertragungs-Umleitungsanforderung (205) zu der Inhaltsquelleneinrichtung und Empfangen einer mit der Medienübertragungs-Umleitungsanforderung assoziierten Authentifizierungs-ID von der Inhaltsquelleneinrichtung; und Senden (207) einer Medienumsetzungsdienstanforderung und der Authentifizierungs-ID zu der Medienumsetzungsvorrichtung, wobei die Medienumsetzungsdienstanforderung eine Medieninhalts-ID und Wiedergabefähigkeitsinformationen des Medienanwendungsendgeräts führt; und Empfangen eines Medieninhalts von der Medienumsetzungsvorrichtung;
die Medienumsetzungsvorrichtung für Folgendes ausgelegt ist: Senden einer Medieninhalts-Übertragungsanforderung (209), die die Medieninhalts-ID und die Authentifizierungs-ID führt, zu der Inhaltsquelleneinrichtung nach dem Empfang der Medienumsetzungsdienstanforderung, die die Medieninhalts-ID und die Wiedergabefähigkeitsinformationen des Medienanwendungsendgeräts und die Authentifizierungs-ID führt, von dem Medienanwendungsendgerät; Empfangen eines Medieninhalts von der Inhaltsquelleneinrichtung und Umsetzen des Medieninhalts gemäß den empfangenen Wiedergabefähigkeitsinformationen des Medienanwendungsendgeräts; und Senden des umgesetzten Medieninhalts zu dem Medienanwendungsendgerät; und
die Inhaltsquelleneinrichtung für Folgendes ausgelegt ist: Senden der mit der Medienübertragungs-Umleitungsanforderung assoziierten Authentifizierungs-ID zu dem Medienanwendungsendgerät nach dem Empfang der Medienübertragungs-Umleitungsanforderung von dem Medienanwendungsendgerät; und Empfangen der Medieninhalts-Übertragungsanforderung, die die Medieninhalts-ID und die Authentifizierungs-ID führt, von der Medienumsetzungsvorrichtung und Senden des durch die Medieninhalts-ID identifizierten Medieninhalts zu der Medienumsetzungsvorrichtung, nachdem gemäß der Authentifizierungs-ID bestimmt wird, dass die Medieninhaltsübertragungsanforderung gültig ist.

## Revendications

1. Procédé de conversion de contenu multimédia, comprenant :
la réception (102, 207), par un appareil de conversion multimédia, d'une requête de service de conversion multimédia et d'un ID d'authentification depuis un terminal d'application multimédia, la requête de service de conversion multimédia comportant un ID de contenu multimédia et une information de capabilité de lecture du terminal d'application multimédia, et l'ID d'authentification étant associé à une requête de redirection de transmission multimédia (205) et envoyé (206) par un dispositif de contenu source au terminal d'application multimédia après que le dispositif de contenu source reçoit la requête de redirection de transmission multimédia depuis le terminal d'application multimédia ;
l'envoi (103, 209), par l'appareil de conversion multimédia, d'une requête de transmission de contenu multimédia qui comporte l'ID de contenu multimédia au dispositif de contenu source, et l'envoi de l'ID d'authentification au dispositif de contenu source ;
la réception (103, 210), par l'appareil de conversion multimédia, d'un contenu multimédia identifié par l'ID de contenu multimédia depuis le dispositif de contenu source après que le dispositif de contenu source détermine que la requête de transmission de contenu multimédia est valable d'après l'ID d'authentification ; et
la conversion (104, 211), par l'appareil de conversion multimédia, du contenu multimédia reçu en fonction de l'information de capabilité de lecture du terminal d'application multimédia, et l'envoi (104, 212) du contenu multimédia converti au terminal d'application multimédia.

2. Procédé selon la revendication 1, dans lequel :
le processus de réception de l'ID d'authentification depuis le terminal d'application multimédia par l'appareil de conversion multimédia comprend : la réception (207),
par l'appareil de conversion multimédia, de l'ID d'authentification inclus dans la requête de service de conversion multimédia depuis le terminal d'application multimédia ; et/ou
le processus d'envoi de l'ID d'authentification au dispositif de contenu source par l'appareil de conversion multimédia comprend : l'inclusion, par l'appareil de conversion multimédia, de l'ID d'authentification dans la requête de transmission de contenu multimédia (209) envoyée au dispositif de contenu source.

3. Procédé selon la revendication 1, comprenant en outre, après que l'appareil de conversion multimédia envoie la requête de transmission de contenu multimédia au dispositif de contenu source : la réception, par l'appareil de conversion multimédia, d'un message d'interrogation d'ID d'authentification depuis le dispositif de contenu source ; et
l'envoi, par l'appareil de conversion multimédia, de l'ID d'authentification depuis le terminal d'application multimédia au dispositif de contenu source après la réception du message d'interrogation d'ID d'authentification depuis le dispositif de contenu source ; ou
l'interrogation, par l'appareil de conversion multimédia, du terminal d'application multimédia à la recherche de l'ID d'authentification après la réception du message d'interrogation d'ID d'authentification depuis le dispositif de contenu source ; et l'envoi, par l'appareil de conversion multimédia, de l'ID d'authentification au dispositif de contenu source après la réception de l'ID d'authentification depuis le terminal d'application multimédia.

4. Procédé selon la revendication 1, comprenant en outre,
avant que l'appareil de conversion multimédia envoie la requête de transmission de contenu multimédia au dispositif de contenu source : la négociation, par le dispositif de contenu source, d'une première clé avec le terminal d'application multimédia ; la réception, par l'appareil de conversion multimédia, de la première clé depuis le terminal d'application multimédia ; et la négociation, par l'appareil de conversion multimédia, d'une seconde clé avec le terminal d'application multimédia ;
le procédé comprenant en outre, avant que l'appareil de conversion multimédia reçoive le contenu multimédia identifié par l'ID de contenu multimédia depuis le dispositif de contenu source : le cryptage, par le dispositif de contenu source, du contenu multimédia avec la première clé ;
le procédé comprenant en outre, avant que l'appareil de conversion multimédia convertisse le contenu multimédia reçu : le décryptage, par l'appareil de conversion multimédia, du contenu multimédia reçu avec la première clé ; et
le procédé comprenant en outre, après que l'appareil de conversion multimédia convertit le contenu multimédia reçu : le cryptage, par l'appareil de conversion multimédia, du contenu multimédia converti avec la seconde clé.

5. Procédé selon la revendication 4, comprenant en outre après que le dispositif de contenu source négocie la première clé avec le terminal d'application multimédia et avant que le dispositif de contenu source envoie le contenu multimédia à l'appareil de conversion multimédia ou durant le processus d'envoi du contenu multimédia à l'appareil de conversion multimédia par le dispositif de contenu source :
l'actualisation de la première clé.

6. Terminal d'application multimédia, comprenant un module de requête de redirection de transmission multimédia (401) et un module de requête de service de conversion multimédia (402), dans lequel :
le module de requête de redirection de transmission multimédia est adapté pour :
envoyer une requête de redirection de transmission multimédia (205) à un dispositif de contenu source, recevoir un ID d'authentification associé à la requête de redirection de transmission multimédia depuis le dispositif de contenu source, et
envoyer l'ID d'authentification au module de requête de service de conversion multimédia : et
le module de requête de service de conversion multimédia est adapté pour : envoyer (207) une requête de service de conversion multimédia et l'ID d'authentification à un appareil de conversion multimédia, la requête de service de conversion multimédia comportant un ID de contenu multimédia et une information de capabilité de lecture du terminal d'application multimédia, et recevoir un contenu multimédia depuis l'appareil de conversion multimédia.

7. Terminal d'application multimédia selon la revendication 6, comprenant en outre un module de négociation de clé (403) et un module de décryptage (404), dans lequel :
le module de négociation de clé est adapté pour : négocier une première clé avec le dispositif de contenu source, négocier une seconde clé avec l'appareil conversion multimédia, envoyer la première clé à l'appareil de conversion multimédia, et
envoyer la seconde clé au module de décryptage ;
le module de requête de service de conversion multimédia est adapté en outre pour envoyer le contenu multimédia reçu au module de décryptage ; et
le module de décryptage est adapté pour décrypter le contenu multimédia reçu avec la seconde clé reçue.

8. Appareil de conversion multimédia, comprenant un module d'interface de service de conversion multimédia (501) et un module de traitement de conversion multimédia (502), dans lequel :
le module d'interface de service de conversion multimédia est adapté pour : envoyer une requête de transmission de contenu multimédia (209) qui comporte un ID de contenu multimédia et un ID d'authentification à un dispositif de contenu source après la réception (207) d'une requête de service de conversion multimédia et de l'ID d'authentification depuis un terminal d'application multimédia, la requête de service de conversion multimédia comportant l'ID de contenu multimédia et une information de capabilité de lecture du terminal d'application multimédia, et envoyer l'information de capabilité de lecture du terminal d'application multimédia au module de traitement de conversion multimédia ; et
le module de traitement de conversion multimédia est adapté pour : recevoir un contenu multimédia depuis le dispositif de contenu source et l'information de capabilité de lecture du terminal d'application multimédia depuis le module d'interface de service de conversion multimédia, convertir le contenu multimédia reçu, et envoyer le contenu multimédia converti au terminal d'application multimédia.

9. Appareil de conversion multimédia selon la revendication 8, comprenant en outre un module de négociation de clé (503), un module de cryptage (504) et un module de décryptage (505), dans lequel :
le module de négociation de clé est adapté pour : négocier une seconde clé avec le terminal d'application multimédia, envoyer la seconde clé au module de cryptage,
recevoir une première clé depuis le terminal d'application multimédia, et envoyer la première clé au module de décryptage ;
le module de décryptage est adapté pour : décrypter le contenu multimédia provenant du dispositif de contenu source avec la première clé reçue, et envoyer le contenu multimédia décrypté au module de traitement de conversion multimédia ; et
le module de cryptage est adapté pour : crypter le contenu multimédia provenant du module de traitement de conversion multimédia avec la seconde clé reçue, et envoyer le contenu multimédia crypté au terminal d'application multimédia.

10. Dispositif de contenu source, comprenant un module d'interface de service de redirection multimédia (601), un module d'authentification (602), et un module d'envoi de contenu multimédia (603), dans lequel :
le module d'interface de service de redirection multimédia est adapté pour : après la réception d'une requête de redirection de transmission multimédia (205) depuis un terminal d'application multimédia, envoyer la requête de redirection de transmission multimédia au module d'authentification, recevoir un ID d'authentification renvoyé depuis le module d'authentification, et envoyer l'ID d'authentification au terminal d'application multimédia ;
le module d'authentification est adapté pour : envoyer l'ID d'authentification associé à la requête de redirection de transmission multimédia au module d'interface de service de redirection multimédia après la réception de la requête de redirection de transmission multimédia provenant du module d'interface de service de redirection multimédia ; juger que la requête de transmission de contenu multimédia est valable ou non d'après l'ID d'authentification après la réception d'une requête de transmission de contenu multimédia et de l'ID d'authentification depuis le module d'envoi de contenu multimédia ; et envoyer un message d'acquittement au module d'envoi de contenu multimédia s'il est déterminé que la requête de transmission de contenu multimédia est valable ; et
le module d'envoi de contenu multimédia est adapté pour : acheminer la requête de transmission de contenu multimédia et l'ID d'authentification jusqu'au module d'authentification après la réception de la requête de transmission de contenu multimédia comportant un ID de contenu multimédia et l'ID d'authentification depuis un appareil de conversion multimédia, et envoyer un contenu multimédia identifié par l'ID de contenu multimédia à l'appareil de conversion multimédia après la réception du message d'acquittement depuis le module d'authentification.

11. Dispositif de contenu source selon la revendication 10, comprenant en outre un module de négociation de clé (604) et un module de cryptage (605), dans lequel :
le module de négociation de clé est adapté pour : négocier une clé avec le terminal d'application multimédia et envoyer la clé au module de cryptage ; et
le module de cryptage est adapté pour : crypter le contenu multimédia provenant du module d'envoi de contenu multimédia avec la clé reçue, et envoyer le contenu multimédia crypté à l'appareil de conversion multimédia.

12. Système de conversion de contenu multimédia, comprenant un terminal d'application multimédia (301) selon la revendication 6, un appareil de conversion multimédia (302) selon la revendication 8, et un dispositif de contenu source (303) selon la revendication 10, dans lequel :
le terminal d'application multimédia est adapté pour : envoyer une requête de redirection de transmission multimédia (205) au dispositif de contenu source et recevoir un ID d'authentification associé à la requête de redirection de transmission multimédia depuis le dispositif de contenu source ; et envoyer (207) une requête de service de conversion multimédia et l'ID d'authentification à l'appareil de conversion multimédia, la requête de service de conversion multimédia comportant un ID de contenu multimédia et une information de capabilité de lecture du terminal d'application multimédia ; et recevoir un contenu multimédia depuis l'appareil de conversion multimédia ;
l'appareil de conversion multimédia est adapté pour : envoyer une requête de transmission de contenu multimédia (209) qui comporte l'ID de contenu multimédia et l'ID d'authentification au dispositif de contenu source après la réception de la requête de service de conversion multimédia qui comporte l'ID de contenu multimédia et l'information de capabilité de lecture du terminal d'application multimédia et l'ID d'authentification depuis le terminal d'application multimédia ;
recevoir un contenu multimédia depuis le dispositif de contenu source, et convertir le contenu multimédia en fonction de l'information de capabilité de lecture du terminal d'application multimédia reçue ; et envoyer le contenu multimédia converti au terminal d'application multimédia ; et
le dispositif de contenu source est adapté pour : envoyer l'ID d'authentification associé à la requête de redirection de transmission multimédia au terminal d'application multimédia après la réception de la requête de redirection de transmission multimédia depuis le terminal d'application multimédia ; et recevoir la requête de transmission de contenu multimédia comportant l'ID de contenu multimédia et l'ID d'authentification depuis l'appareil de conversion multimédia et
envoyer un contenu multimédia identifié par l'ID de contenu multimédia à l'appareil de conversion multimédia après avoir déterminé que la requête de transmission de contenu multimédia est valable d'après l'ID d'authentification.
